(19)

Europäisches Patentamt

European Patent Office

Office européen des brevets

(11) **EP 4 597 627 A1**

(12) **EUROPEAN PATENT APPLICATION**
published in accordance with Art. 153(4) EPC

(43) Date of publication:
**06.08.2025  Bulletin 2025/32**

(21) Application number: **23916683.8**

(22) Date of filing: **17.01.2023**

(51) International Patent Classification (IPC):
***H01M 4/58*** [(2010.01)]  ***H01M 10/36*** [(2010.01)]

(52) Cooperative Patent Classification (CPC):
**H01M 4/58; H01M 10/36;** Y02E 60/10

(86) International application number:
**PCT/CN2023/072597**

(87) International publication number:
**WO 2024/152193 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **XU, Yue**
**Ningde, Fujian 352100 (CN)**

• **YANG, Huiling**
**Ningde, Fujian 352100 (CN)**
• **GUAN, Yingjie**
**Ningde, Fujian 352100 (CN)**
• **QIN, Meng**
**Ningde, Fujian 352100 (CN)**
• **WEN, Yan**
**Ningde, Fujian 352100 (CN)**
• **HUANG, Qisen**
**Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **POSITIVE ELECTRODE ACTIVE MATERIAL AND PREPARATION METHOD THEREFOR, AND POSITIVE ELECTRODE SHEET, SECONDARY BATTERY AND ELECTRIC DEVICE COMPRISING POSITIVE ELECTRODE ACTIVE MATERIAL**

(57)     This application provides a positive active material. The positive active material is a composite of $Na_xR_y(PO_4)_z(P_2O_7)_k$ and C, where $1 \leq x \leq 7$, $1 \leq y \leq 4$, $1 \leq z \leq 2$, $1 \leq k \leq 4$, and R includes at least one of Mg, Al, Sc, Ti, V, Cr, Mn, Fe, Co, Ni, Cu, Zn, Zr, Nb, Mo, Sn, Hf, Ta, W, or Pb; and a water content of the positive active material is not higher than 1600 ppm. This application further provides a method for preparing the positive active material, a positive electrode plate containing the material, a secondary battery, and an electrical device. The positive active material of this application contains a relatively low water content, and can effectively alleviate or avoid difficulty of processing of the positive active material, and contribute to a relatively high level of specific charge capacity, specific discharge capacity, and first-cycle Coulombic efficiency of the positive electrode plate and secondary battery containing the material.

EP 4 597 627 A1

**Description**

**TECHNICAL FIELD**

This application relates to the technical field of sodium batteries, and in particular, to a positive active material, a positive electrode plate containing the positive active material, a secondary battery, and an electrical device.

**BACKGROUND**

Secondary batteries are one of ideal choices for energy storage technology. Although lithium-ion secondary batteries have achieved great success in a variety of application fields, the relatively scarce and expensive lithium resources have led researchers to turn their attention to sodium that is similar to lithium in performance but more abundant and easily available. Sodium-ion secondary batteries are also considered to be one of the competitive candidates for use in future energy storage systems. However, the water content in a sodium-ion positive active material in an electrode plate in the prior art is relatively high, thereby potentially impairing the electrochemical performance, energy density, safety performance, and other performance metrics of the electrode plate and the battery.

In view of the above problems, it is necessary to provide a low-water-content sodium phosphate positive active material to effectively alleviate or even avoid the water content-related problems of the positive active material during slurry processing, and in turn, achieve a relatively high level of specific charge capacity, specific discharge capacity, and first-cycle Coulombic efficiency of the positive electrode plate of the battery and the secondary battery.

**SUMMARY**

To achieve the above objective, this application provides a positive active material, a positive electrode plate containing the positive active material, a secondary battery, and an electrical device.

A first aspect of this application provides a positive active material. The positive active material is a composite of $Na_xR_y(PO_4)_z(P_2O_7)_k$ and C, where $1 \le x \le 7$, $1 \le y \le 4$, $1 \le z \le 2$, $1 \le k \le 4$, and R includes at least one of Mg, Al, Sc, Ti, V, Cr, Mn, Fe, Co, Ni, Cu, Zn, Zr, Nb, Mo, Sn, Hf, Ta, W, or Pb; and a water content of the positive active material is not higher than 1600 ppm. The positive active material according to this embodiment of this application contains a relatively low water content, and can effectively alleviate or avoid the problem of slurry instability (such as gelling) of the positive active material, thereby improving the processability of the positive active material significantly, and contributing to a relatively high level of specific charge capacity, specific discharge capacity, and first-cycle Coulombic efficiency of the positive electrode plate.

In any embodiment, the water content is not higher than 1400 ppm, optionally not higher than 1200 ppm, optionally not higher than 1000 ppm, optionally not higher than 900 ppm, optionally not lower than 50 ppm, further optionally not lower than 70 ppm, and still further optionally is 200 to 800 ppm. The positive active material with a water content falling within the above range is more cost-effective while ensuring that the material possesses the above favorable properties.

In any embodiment, a chemical composition of the positive active material satisfies at least one of the following conditions:

(1)

$$3 \le x \le 5;$$

(2)

$$2 \le y \le 4;$$

(3)

$$1.5 \le z \le 2;$$

(4)

$$1 \le k \le 1.5;$$

or

(5) R is Fe.

Such positive active materials possess a relatively high energy density.

A second aspect of this application provides a method for preparing a positive active material. The positive active material is a composite of $Na_xR_y(PO_4)_z(P_2O_7)_k$ and C, where $1 \leq x \leq 7$, $1 \leq y \leq 4$, $1 \leq z \leq 2$, $1 \leq k \leq 4$, and R includes at least one of Mg, Al, Sc, Ti, V, Cr, Mn, Fe, Co, Ni, Cu, Zn, Zr, Nb, Mo, Sn, Hf, Ta, W, or Pb; a water content of the positive active material is not higher than 1600 ppm. The method includes the following steps:

a) preparing a precursor material: preparing a mixed slurry containing an R source compound, a sodium source compound, a phosphorus source compound, and a carbon source compound, and drying the mixed slurry to obtain the precursor material; and

b) sintering the precursor material in a sintering atmosphere to obtain the positive active material, where a ratio of a ventilation volume value of a sintering atmosphere to a mass value of the precursor material is 0.85 to 3.42 $m^3$/kg, optionally 1.70 to 3.42 $m^3$/kg, and further optionally 2.27 to 3.42 $m^3$/kg.

The positive active material prepared by the above method contains a relatively low water content, and is highly processable. The positive electrode plate and battery containing this material are endowed with a relatively high level of specific charge capacity, specific discharge capacity, and first-cycle Coulombic efficiency.

In any embodiment, in step b), a heating rate is 0.5 to 5 °C/ min, and optionally 2 to 5 °C/min. Such a heating rate contributes to a positive active material with a relatively low water content.

In any embodiment, in step b), the sintering atmosphere includes nitrogen and/or argon.

In any embodiment, in step b), a flow rate of the nitrogen is 2 to 10 L/min, optionally 5 to 10 L/min; and/or, the sintering continues for a duration of approximately 10 to 30 hours, and optionally approximately 18 to 23 hours.

With the above conditions applied in step b), the resultant positive active material is further facilitated to contain a relatively low water content.

In any embodiment, the method of this application further includes the following step:

c) pulverizing the positive active material, where the pulverization is performed at an ambient humidity not higher than 10%, and optionally at an ambient humidity of 2% to 10%. The ambient humidity of the material controlled in the pulverization step leads the pulverized positive active material to contain a water content as low as or even lower than the water content of the material in the as-produced state.

In any embodiment, the method of this application further includes the following step:

d) oven-drying the positive active material. The oven-drying step can further reduce the water content of the material.

A third aspect of this application further provides a positive electrode plate. The positive electrode plate includes the positive active material disclosed in the first aspect or a positive active material prepared by the method disclosed in the second aspect of this application.

A fourth aspect of this application further provides a secondary battery. The secondary battery includes the positive electrode plate disclosed in the third aspect of this application.

A fifth aspect of this application further provides an electrical device. The electrical device includes the secondary battery disclosed in the fourth aspect of this application.

The low-water-content sodium phosphate positive active material provided in this application can effectively improve the processability of the positive active material (for example, avoid slurry gelling), thereby contributing to a relatively high level of specific charge capacity and specific discharge capacity of the positive electrode plate of the battery.

**BRIEF DESCRIPTION OF DRAWINGS**

FIG. 1 is a schematic diagram of a secondary battery according to an embodiment of this application;

FIG. 2 is an exploded view of a secondary battery shown in FIG. 1 according to an embodiment of this application;

FIG. 3 is a schematic diagram of a battery module according to an embodiment of this application;

FIG. 4 is a schematic diagram of a battery pack according to an embodiment of this application;

FIG. 5 is an exploded view of a battery pack shown in FIG. 4 according to an embodiment of this application; and

FIG. 6 is a schematic diagram of an electrical device that uses a secondary battery as a power supply according to an embodiment of this application.

List of reference numerals:

1. battery pack; 2. upper box; 3. lower box; 4. battery module; 5. battery cell; 51. housing; 52. electrode assembly; 53. top cap assembly.

**DETAILED DESCRIPTION OF EMBODIMENTS**

The following describes and discloses in detail a positive active material, a method for preparing the positive active material, a positive electrode plate, a secondary battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Secondary batteries are one of ideal choices for energy storage technology. Although lithium-ion secondary batteries have achieved great success in a variety of application fields, the relatively scarce and expensive lithium resources have led researchers to turn their attention to sodium that is similar to lithium in performance but more abundant and easily available. Sodium-ion secondary batteries are also considered to be one of the competitive candidates for use in future energy storage systems.

A variety of positive active materials for use in sodium-ion batteries have been reported so far, among which a sodium phosphate salt is considered to be the most promising positive active material for use in sodium-ion secondary batteries by virtue of a combination of advantages such as cost-effectiveness, environment-friendliness, a high theoretical capacity, high average operating voltage, and low volume expansion. However, the water content in such a material in the prior art is relatively high. The preparation of a nonaqueous slurry is more sensitive to the water content of the material. Even a very small amount of water may cause the slurry to gel, thereby making it difficult to apply the slurry, and impairing the electrochemical performance and energy density of the electrode plate and the battery. In addition, the increase in the water content of the positive active material makes sodium prone to leach out from the bulk phase of the material, and results in residual alkali on the surface of the material, that is, sodium bicarbonate, sodium hydroxide, sodium ions, and the like, thereby deteriorating the kinetic performance of the electrode material during charge and discharge and giving rise to gassing in the battery during cycling.

In order to alleviate the above problems, a drying method is typically applied in the art to reduce the water content of the material. However, the effect of reducing the water content by drying is much limited, and can hardly meet the requirement.

In view of the above problems, this application provides a low-water-content sodium phosphate positive active material and a method for preparing the low-water-content sodium phosphate positive active material, and can effectively alleviate or even avoid the problem of gelling of the positive active material during processing, and in turn, achieve a relatively high level of specific charge capacity and specific discharge capacity of the positive electrode plate of the battery.

## Positive active material and preparation method thereof

An aspect of this application provides a positive active material. The positive active material is a composite of $Na_xR_y(PO_4)_z(P_2O_7)_k$ and C, where $1 \leq x \leq 7$, $1 \leq y \leq 4$, $1 \leq z \leq 2$, $1 \leq k \leq 4$, and R includes at least one of Mg, Al, Sc, Ti, V, Cr, Mn, Fe, Co, Ni, Cu, Zn, Zr, Nb, Mo, Sn, Hf, Ta, W, or Pb; and a water content of the positive active material is not higher than 1600 ppm.

Without intending to be bound by any theory, the positive active material according to this embodiment of this application contains a relatively low water content, and can effectively alleviate or avoid the problem of slurry instability (such as gelling) of the positive active material, thereby improving the processability of the positive active material significantly, and contributing to a relatively high level of specific charge capacity, specific discharge capacity, and first-cycle Coulombic efficiency of the positive electrode plate.

As used herein, "the problem of gelling" means that the slurry is jelly-like and lacks fluidity, and therefore, is unable to be applied normally.

Although the water content of the positive active material can be reduced to some extent by drying the positive active material before the slurry is prepared, the requirement for a low water content of the material in the field is still not met. By contrast, the positive active material according to an embodiment of this application contains a lower water content, and can improve the processability of the slurry, thereby improving the performance metrics such as specific charge capacity, specific discharge capacity, and first-cycle Coulombic efficiency of the positive electrode plate and the battery.

As used herein, "water content" means the amount of water contained in the positive active material per unit mass. The water content is measured in accordance with GB/T11133-2015 (*Standard Test Method for Determination of Water in Petroleum Products, Lubricating Oils, and Additives-Karl Fischer Coulometric Titration Method).*

As used herein, the term "positive active material" means a material with the above chemical composition, and may be in different states such as an as-produced state, pulverized state, and dried state. Accordingly, the water content of the positive active material is classed into as-produced water content, post-pulverization water content, and post-drying water content. The as-produced state is defined as a state of the positive active material sintered (optionally, pre-sieved). The water content of the material as produced is the as-produced water content. The pulverized state is defined as a state of powder obtained by pulverizing the as-produced material. The water content of the material in the pulverized state is the post-pulverization water content. The dried state is defined as a state of the powder obtained by drying. The water content of the material in the dried state is the post-drying water content.

In some embodiments, the composite of $Na_xR_y(PO_4)_z(P_2O_7)_k$ and carbon is carbon-coated $Na_xR_y(PO_4)_z(P_2O_7)_k$, where x, y, z, k, and R are defined earlier above.

In some embodiments, the water content of the positive active material is not higher than 1400 ppm, optionally not higher than 1200 ppm, optionally not higher than 1100 ppm, optionally not higher than 1000 ppm, optionally not higher than 950 ppm, optionally not lower than 900 ppm, optionally not higher than 850 ppm, optionally not higher than 800 ppm, optionally not higher than 750 ppm, optionally not higher than 700 ppm, and optionally not higher than 650 ppm. In some embodiments, optionally, the water content of the positive active material is not lower than 50 ppm, optionally not lower than 70 ppm, optionally not lower than 200 ppm, optionally not lower than 300 ppm, optionally not lower than 350 ppm, optionally not lower than 400 ppm, optionally not lower than 450 ppm, optionally not lower than 500 ppm, and optionally not lower than 550 ppm. In some embodiments, the water content of the positive active material is 200 to 800 ppm. Although a lower water content of the positive active material is expected, the positive active material with a water content falling within the above range is more cost-effective while ensuring that the material possesses the favorable properties.

In some embodiments, the chemical composition of the positive active material satisfies at least one of the following conditions:

(1) $3 \leq x \leq 5$, optionally 4;
(2) $2 \leq y \leq 4$, optionally 3;
(3) $1.5 \leq z \leq 2$, optionally 2;

(4) $1 \leq k \leq 1.5$, optionally 1; or
(5) R is Fe.

Such positive active materials possess a relatively high energy density.

Another aspect of this application provides a method for preparing the positive active material disclosed above. The method includes the following steps:

a) preparing a precursor material: preparing a mixed slurry containing an R source compound, a sodium source compound, a phosphorus source compound, and a carbon source compound, and drying the mixed slurry to obtain the precursor material;

b) sintering: sintering the precursor material in a sintering atmosphere to obtain the positive active material, where a ratio of a ventilation volume value of a sintering atmosphere to a mass value of the precursor material is 0.85 to 3.42 $m^3$/kg, optionally 1.70 to 3.42 $m^3$/kg, and further optionally 2.27 to 3.42 $m^3$/kg.

The positive active material prepared by the above method contains a relatively low water content, and is highly processable. The positive electrode plate and battery containing this material are endowed with a relatively high level of specific charge capacity, specific discharge capacity, and first-cycle Coulombic efficiency. Without intending to be bound by any theory, the method according to this embodiment of this application effectively reduces the water content (especially the as-produced water content) of the positive active material by controlling the sintering step. A low as-produced water content is conducive to maintaining or even further reducing the water content of the positive active material in potential further treatment (such as pulverizing and/or oven-drying). In particular, the ratio of the ventilation volume value of the sintering atmosphere in cubic meters in the sintering step to the mass value of the precursor material in kilograms is controlled to fall within the above range, thereby achieving a low water content of the positive active material.

The as-produced water content of the positive active material obtained in the above steps is not higher than 1400 ppm, optionally not higher than 1200 ppm, optionally not higher than 1100 ppm, optionally not higher than 1000 ppm, optionally not higher than 950 ppm, optionally not lower than 900 ppm, optionally not higher than 850 ppm, optionally not higher than 800 ppm, optionally not higher than 750 ppm, optionally not higher than 700 ppm, and optionally not higher than 650 ppm. In some embodiments, optionally, the water content of the positive active material is not lower than 50 ppm, optionally not lower than 70 ppm, optionally not lower than 200 ppm, optionally not lower than 300 ppm, optionally not lower than 350 ppm, optionally not lower than 400 ppm, optionally not lower than 450 ppm, optionally not lower than 500 ppm, and optionally not lower than 550 ppm. In some embodiments, the water content of the positive active material is 200 to 800 ppm.

As used herein, the term "ventilation volume" means a total volume of the sintering atmosphere gas passed into the sintering equipment in the sintering duration, expressed as: ventilation volume ($m^3$) = flow rate of the sintering atmosphere gas × sintering duration. For example, when the sintering atmosphere is nitrogen, nitrogen volume ($m^3$) = nitrogen flow rate (L/min) × sintering duration (h) × 0.06. When the nitrogen volume is constant, the longer the sintering duration, the lower the corresponding nitrogen flow rate; the shorter the sintering duration, the higher the corresponding nitrogen flow rate.

As used herein, the term "sintering duration" means a sum of the heating duration, the temperature holding duration, and the cooling duration in the sintering step.

In some embodiments, in step a), the mixed slurry may be prepared, for example, by the following method: adding an R source compound, a sodium source compound, and a phosphorus source compound into a solvent to make a slurry; and then adding a carbon source compound into the slurry to obtain the mixed slurry.

In some embodiments, the solvent in step a) may be, for example, water (optionally deionized water) or ethanol.

In some embodiments, in step a), the slurry and the mixed slurry may be prepared by one or more of the methods such as grinding and solvent dispersion.

In some embodiments, in step a), the grinding may be performed in a conventional manner in the art. For example, the grinding may be ball milling, sand milling, vibration milling, or roll milling. The grinding may be performed by conventional equipment in the art (for example, ball mill, sand mill, vibration mill, or roll mill).

In some embodiments, the R source compound may be any compound that can provide the R element in the art. When the R element is Fe, the R source compound may be, for example, at least one of ferrous oxalate, ferric nitrate, ferric citrate, or ammonium ferric citrate.

In some embodiments, the sodium source compound may be any compound that can provide sodium in the art. Such a compound may be, for example, at least one of sodium pyrophosphate, sodium acetate, sodium nitrate, sodium carbonate, sodium bicarbonate, sodium dihydrogen phosphate, or disodium hydrogen phosphate.

In some embodiments, the phosphorus source compound may be any compound that can provide phosphorus in the art. Such a compound may be, for example, at least one of ammonium dihydrogen phosphate, phosphoric acid, diammonium hydrogen phosphate, ammonium phosphate, disodium hydrogen phosphate, sodium pyrophosphate, or sodium dihydrogen phosphate.

In some embodiments, the carbon source compound may be any compound that can provide carbon in the art. Such a compound may be, for example, at least one of oxalic acid, ascorbic acid, formaldehyde, acetaldehyde, n-butyraldehyde, lactic acid, citric acid, malic acid, oxalic acid, adipic acid, citric acid, soluble starch, ascorbic acid, sucrose, or glucose. The carbon source compound improves the conductivity of the material.

In some embodiments, in step a), the average particle diameter $D_{v50}$ of the solid material contained in the mixed slurry obtained by grinding may be 0.1 to 0.8 micrometers. Such a particle diameter range is conducive to more thorough reaction of the material during the sintering.

As used herein, the term "average particle diameter $D_{v50}$" means a particle diameter corresponding to a point at which the cumulative volume distribution percentage reaches 50% in a volume-based particle size distribution curve. The average particle diameter may be determined by a conventional method in the art, for example, by using a laser particle size analyzer.

In some embodiments, in step a), the drying is performed by at least one of the following methods: blast air oven-drying, vacuum drying, freeze drying, or spray drying.

In some embodiments, in step b), the sintering atmosphere includes nitrogen and/or argon. Optionally, the sintering atmosphere further includes hydrogen. In some embodiments, the sintering atmosphere is nitrogen. Generally, sintering atmosphere is classed into an inert atmosphere and a reducing atmosphere. Herein, if the sintering atmosphere is nitrogen and/or argon, the sintering atmosphere is an inert sintering atmosphere; and, if the sintering atmosphere is a nitrogen-hydrogen mixed gas or an argon-hydrogen mixed gas, the sintering atmosphere is a reducing atmosphere. In some embodiments, in step b), the sintering atmosphere is nitrogen.

In some embodiments, in step b), the sintering atmosphere contains an oxygen content less than 100 ppm, and optionally an oxygen content of 30 to 50 ppm. Controlling the oxygen content to fall within the above range is conducive to reducing side reactions and improving the conductivity of the material. The sintering atmosphere is passed in after the system (for example, a sintering furnace) is vacuumized. The oxygen content is the amount of oxygen remaining in the system vacuumized.

In some embodiments, in step b), a flow rate of the nitrogen is 2 to 10 L/min, and optionally 5 to 10 L/min.

In some embodiments, in step b), the sintering continues for a duration of approximately 10 to 30 hours, and optionally approximately 18 to 23 hours.

Without intending to be bound by any theory, the sintering duration and/or nitrogen flow rate falling within the above ranges can further facilitate the resultant positive active material to contain a relatively low water content (especially the as-produced water content).

In some embodiments, in step b), the heating rate is 0.5 to 5 °C/ min. In some embodiments, optionally, the heating rate is 2 to 5 °C/min. Without intending to be bound by any theory, such a heating rate ensures a sufficient reaction and is conducive to timely draining of the water generated by the reaction, thereby contributing to a positive active material with a relatively low water content (especially as-produced water content).

In some embodiments, in step b), the sintering is performed by at least one of the following equipment: a tube furnace, a vacuum box furnace, an explosion-proof box furnace, a pusher kiln, a roller kiln, a bell kiln, or a rotary kiln.

In some embodiments, the sintering in step b) includes a low-temperature sintering stage and a high-temperature sintering stage. The low-temperature sintering may keep a temperature of 300 to 350 °C for 3 to 5 hours. The high-temperature sintering may keep a temperature of 500 to 550 °C for 7 to 11 hours, optionally for approximately 10 hours. At this time, the temperature holding duration mentioned above means a sum of a low-temperature sintering holding duration and a high-temperature sintering holding duration. The heating duration mentioned above means a sum of the time required for the temperature to rise from the initial temperature (for example, ambient temperature or room temperature (25 °C)) to the low-temperature sintering temperature and the time required for the temperature to rise from the low-temperature sintering temperature to the high-temperature sintering temperature.

In some embodiments, the method further includes the following step:

c) pulverizing the positive active material, where the pulverization is performed at an ambient humidity not higher than 10%, and optionally at an ambient humidity of 2% to 10%. Without intending to be bound by any theory, the ambient humidity of the material controlled in the pulverization step leads the pulverized positive active material to contain a water content as low as or even lower than the water content of the material in the as-produced state.

The water content of the pulverized positive active material is not higher than 1500 ppm, optionally not higher than 1200 ppm, optionally not higher than 1100 ppm, optionally not higher than 1000 ppm, optionally not higher than 950 ppm, optionally not lower than 900 ppm, optionally not higher than 850 ppm, optionally not higher than 800 ppm, optionally not higher than 750 ppm, optionally not higher than 700 ppm, and optionally not higher than 650 ppm. In some embodiments, the water content of the pulverized positive active material is not lower than 50 ppm, optionally not lower than 70 ppm, optionally not lower than 200 ppm, optionally not lower than 300 ppm, optionally not lower than 350 ppm, optionally not lower than 400 ppm, optionally not lower than 450 ppm. In some embodiments, the water content of the pulverized positive electrode material is 200 to 800 ppm.

In some embodiments, the method further includes the following step:
d) oven-drying the positive active material.
The drying step in this application may be performed by a conventional drying method in the art such as vacuum drying. The drying temperature is 100 °C to 200 °C, and optionally 110 °C to 150 °C. The drying duration is 12 h to 36 h.
The water content of the dried positive active material is not higher than 1200 ppm, optionally not higher than 1150 ppm, optionally not higher than 1000 ppm, optionally not lower than 900 ppm, optionally not higher than 850 ppm, optionally not higher than 800 ppm, optionally not higher than 750 ppm, optionally not higher than 700 ppm. In some embodiments, the water content of the dried positive active material is not lower than 50 ppm, optionally not lower than 70 ppm, optionally not lower than 200 ppm, optionally not lower than 250 ppm. In some embodiments, the water content of the dried positive active material is 200 to 800 ppm.
An aspect of this application further provides a positive active material prepared by the method disclosed above.

**Positive electrode plate, secondary battery, and electrical device**

Another aspect of this application provides a positive electrode plate. The positive electrode plate includes the positive active material disclosed herein or a positive active material prepared by the method disclosed herein.
The positive electrode plate includes a positive current collector and a positive electrode film layer that overlays at least one surface of the positive current collector. The positive electrode film layer includes the positive active material disclosed herein.
As an example, the positive current collector includes two surfaces opposite to each other in a thickness direction of the positive current collector. The positive electrode film layer is disposed on either or both of the two opposite surfaces of the positive current collector.
In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).
In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.
In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.
In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.
Another aspect of this application provides a secondary battery.
The secondary battery herein may be in the form of a battery cell, a battery module, a battery pack, or the like.
Another aspect of this application provides an electrical device. The electrical device includes the secondary battery disclosed herein.
The following describes a battery cell, a battery module, a battery pack, and an electrical device according to some embodiments of this application with due reference to drawings.
Generally, a battery cell includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

**[Negative electrode plate]**

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

**[Electrolyte]**

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be one or more selected from sodium hexafluorophosphate ($NaPF_6$), sodium hexafluoroborate ($NaBF_4$), $NaN(SO_2F)_2$ (NaFSI for short), $NaClO_4$, $NaAsF_6$, $NaB(C_2O_4)_2$ (NaBOB for short), $NaBF_2(C_2O_4)$ (NaDFOB for short), $NaN(SO_2RF)_2$, or $NaN(SO_2F)(SO_2RF)$, where RF represents $C_bF_{2b+1}$, b is an integer in the range of 1 to 10, and optionally an integer in the range of 1 to 3. Further optionally, RF is $-CF_3$, $-C_2F_5$, or $-CF_2CF_2CF_3$.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

**[Separator]**

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

**[Outer package]**

In some embodiments, the battery cell may include an outer package configured to package the positive electrode plate, the negative electrode plate, and the electrolyte. As an example, the positive electrode plate, the negative electrode plate, and the separator may be stacked or wound to form a stacked-type battery cell or a jellyroll battery cell. The battery cell is packaged in the outer package. The electrolyte infiltrates in the battery cell. The number of battery cells in a battery cell may be one or more, and may be adjusted as required.

In an embodiment, this application provides an electrode assembly. In some embodiments, the positive electrode plate, the negative electrode plate, and the separator may be made into an electrode assembly by winding or stacking. The outer package may be configured to package the electrode assembly and the electrolyte.

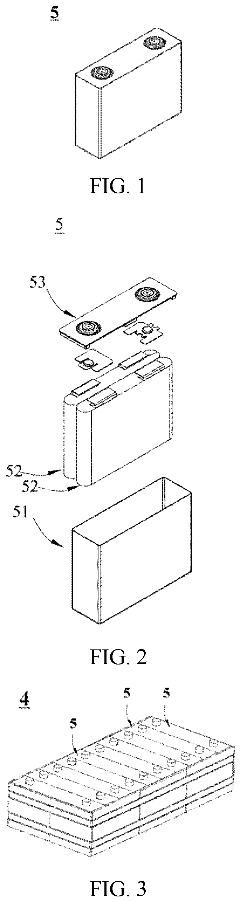

In some embodiments, the outer package of the battery cell may be a soft package such as a pouch-type soft package. The material of the soft package may be plastic such as one or more of polypropylene (PP), polybutylene terephthalate (PBT), or polybutylene succinate (PBS). In some embodiments, the outer package of the battery cell may be a hard shell such as a hard plastic shell, an aluminum shell, a steel shell, or the like. The shape of the battery cell is not particularly limited in this application, and may be cylindrical, prismatic or in any other shape. For example, FIG. 1 shows a prismatic battery cell 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates to the accommodation cavity. The cover plate 53 can be placed over the opening to seal the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 included in a battery cell 5 may be one or more, and may be determined by a person skilled in the art as actually required.

In some embodiments, the battery cells may be assembled to form a battery module or a battery pack. The battery module or battery pack may include one or more battery cells. The specific number of battery cells in a battery module or battery pack may be selected by a person skilled in the art depending on the use and capacity of the battery module or battery pack.

FIG. 3 shows a battery module 4 as an example. Referring to FIG. 3, in the battery module 4, a plurality of battery cells may be arranged sequentially along a length direction of the battery module 4. Alternatively, the secondary batteries may be arranged in any other manner. Further, the plurality of battery cells 5 may be fixed by a fastener.

Optionally, the battery module 4 may further include a shell that provides an accommodation space. The plurality of battery cells 5 are accommodated in the accommodation space.

In some embodiments, the battery cells or battery modules may be assembled to form a battery pack. The battery pack may include one or more battery cells or battery modules. The specific number of battery cells or battery modules in a battery pack may be selected by a person skilled in the art depending on the use and capacity of the battery pack.

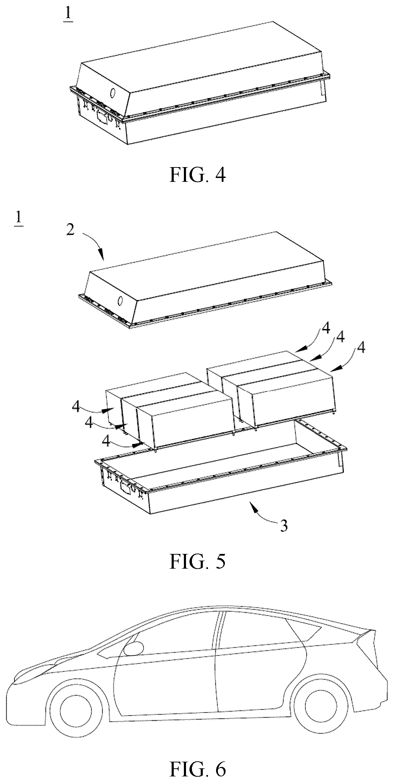

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

In addition, an embodiment of this application further provides an electrical device. The electrical device includes at least one of the battery cell, battery module, or battery pack disclosed in this application. The battery cell, battery module, or battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The battery cell, battery module, or battery pack may be selected for use in the electrical device according to practical requirements.

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

**Embodiments**

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

**Embodiment 1**

1. Preparing a composite of $Na_4Fe_3(PO_4)_2P_2O_7$ and carbon as a positive active material

a) Preparing a precursor material

Adding 1.164 kg of sodium pyrophosphate decahydrate ($Na_4P_2O_7.10H_2O$), 1.367 kg of ferrous oxalate dihydrate ($FeC_2O_4.2H_2O$), and 0.6 kg of ammonium dihydrogen phosphate ($NH_4H_2PO_4$) into 6 L of water according to the atomic molar ratio of Na, Fe, and P in the chemical formula $Na_4Fe_3(PO_4)_2P_2O_7$, and grinding and mixing the mixture. Adding 0.117 kg of glucose into the mixture as a carbon source compound, and then stirring and sand-milling the mixture to obtain a mixed slurry. Spray-drying the mixed slurry to obtain a precursor material.

b) Sintering

Placing 4 kg of the precursor material into a sintering furnace. Vacuumizing the sintering furnace. Controlling the oxygen content in the furnace to be 30 to 50 ppm, where the sintering atmosphere is nitrogen, and the nitrogen flow rate is 5.14 L/min. Raising the temperature of the precursor material from room temperature (25 °C) to 300 °C at a heating rate of 2 °C/ min first. Keeping calcining at 300 °C for 4 hours, and then raising the temperature to 550 °C at a heating rate of 2 °C/ min, and keeping calcining at 550 °C for 10 hours. Subsequently, cooling the calcined product to 100 °C at a cooling rate of 2 °C/min to obtain a product. Performing X-ray diffraction (XRD) analysis and infrared carbon-sulfur analysis to confirm that the product is the desired carbon-coated $Na_4Fe_3(PO_4)_2P_2O_7$, that is, a composite of $Na_4Fe_3(PO_4)_2P_2O_7$ and carbon serving as a positive active material. The amount of nitrogen passed in the furnace during the sintering time is 6.825 $m^3$, and a ratio of this amount to the mass of the precursor (kg) is 1.70625. Transferring the material to a drying room, and performing preliminary crushing and sieving, at which time the positive active material is in an as-produced state. Measuring the as-produced water content of the material and recording the measured value in Table 1.

c) Pulverizing

Jet-milling the sintered positive active material (that is, the positive active material in the as-produced state) at an ambient humidity less than 10%, so as to obtain a positive active material powder (in a pulverized state). Measuring the water content of pulverized material and recording the measured value in Table 1.

d) Oven-drying

Placing the positive active material powder into a drying oven, and drying the powder at 120 °C for 24 h to obtain a dried positive active material powder (in the dried state). Measuring the water content of the positive active material (that is, post-drying water content) and recording the value in Table 1.

2. Preparing a positive electrode plate

Dissolving the polyvinylidene fluoride binder thoroughly in N-methylpyrrolidone, and then adding a carbon black conductive agent and the dried positive active material powder so that the mass ratio between the positive active material powder, the carbon black conductive agent, and the binder is 7: 2: 1, thereby making a uniformly dispersed positive electrode slurry. Applying the positive electrode slurry onto a surface of aluminum foil evenly (the thickness of the aluminum foil is 13 $\mu$m, and the coating concentration is 43.42 mg/1540.25 mm$^2$), and then transferring the aluminum foil into a vacuum oven in which the foil is dried thoroughly. Calendering the resultant electrode plate, and then die-cutting the electrode plate to obtain a positive electrode plate.

3 Preparing a negative electrode plate

Mixing a carbon nanotube material and sodium carboxymethyl cellulose as a binder at a mass ratio of 4: 1.6: 94.4 in deionized water, and stirring well to form a uniform slurry. Applying the slurry onto the surface of copper foil (the thickness of the copper foil is 8 $\mu$m, and the coating concentration is 2 mg/1540.25 mm$^2$), and then transferring the copper foil into a vacuum oven in which the foil is dried thoroughly. Die-cutting the dried foil to obtain a negative electrode plate.

4. Manufacturing of an electrolyte, including:

Dissolving a sodium hexafluorophosphate NaPF$_6$ in an organic solvent ethylene glycol dimethyl ether DME in an argon atmosphere glovebox (in which the content of H$_2$O is less than 0.1 ppm, and the content of O$_2$ is less than 0.1 ppm). Stirring well to obtain an electrolyte solution in which the sodium salt concentration is 0.5 mol/L.

5. Separator

Using a polypropylene film as a separator.

6. Preparing a secondary battery

Stacking the positive electrode plate, the separator, and the negative electrode plate sequentially in such a way that the separator is located between the positive electrode plate and the negative electrode plate to a serve a separation function. Injecting 0.5 gram of the electrolyte solution prepared above, and assembling the stacked structure to form a stacked-type battery.

7. Testing the water content

Measuring the water content in accordance with GB/T11133-2015 *(Standard Test Method for Determination of Water in Petroleum Products, Lubricating Oils, and Additives-Karl Fischer Coulometric Titration Method).*

8. Testing the specific charge capacity, specific discharge capacity, and first-cycle Coulombic efficiency

Charging the above-prepared secondary battery at 25 °C at a constant current of 1/3C until the voltage reaches 3.75 V, and then charging the battery at a constant voltage of 3.75 V until the current drops to 0.05C, and measuring a first-cycle specific charge capacity ($C_{c1}$). Discharging the battery at a constant current of 1/3C until the voltage drops to 1.5 V, and measuring the first-cycle specific discharge capacity ($C_{d1}$). Calculating the first-cycle Coulombic efficiency of the secondary battery according to the following formula:

$$\text{First-cycle Coulombic efficiency} = C_{d1}/C_{c1} \times 100\%.$$

**Embodiments 2 to 18**

Steps in Embodiments 2 to 18 are identical to those in Embodiment 1 except the amount of nitrogen passed in the furnace (the amount of nitrogen is changed by changing the nitrogen flow rate, without changing the sintering duration) and the ratio of the amount of nitrogen to the mass of the sintered precursor, or the heating rate (as detailed in Table 1 below).

**Comparative Embodiments 1 and 2**

Comparative embodiment 1 is substantially identical to Embodiment 1 except the ratio of the amount of nitrogen to the mass of the precursor.
The sintering and drying conditions and test results in the above embodiments and comparative embodiments are shown in Table 1 below.

**Table 1 (To be continued)**

| Embodiment | Amount of nitrogen (m³) | Mass of precursor (kg) | Ratio of amount of nitrogen to mass of precursor (m³/kg) | Heating rate (°C/min) |
|---|---|---|---|---|
| Embodiment 1 | 6.825 | 4 | 1.70625 | 2 |
| Embodiment 2 | 9.555 | 4 | 2.38875 | 2 |
| Embodiment 3 | 13.65 | 4 | 3.4125 | 2 |
| Embodiment 4 | 6.825 | 4 | 1.70625 | 5 |
| Embodiment 5 | 9.555 | 4 | 2.38875 | 5 |
| Embodiment 6 | 13.65 | 4 | 3.4125 | 5 |
| Embodiment 7 | 6.825 | 6 | 1.1375 | 2 |
| Embodiment 8 | 9.555 | 6 | 1.5925 | 2 |
| Embodiment 9 | 13.65 | 6 | 2.275 | 2 |
| Embodiment 10 | 6.825 | 6 | 1.1375 | 5 |
| Embodiment 11 | 9.555 | 6 | 1.5925 | 5 |
| Embodiment 12 | 13.65 | 6 | 2.275 | 5 |
| Embodiment 13 | 6.825 | 8 | 0.853125 | 2 |
| Embodiment 14 | 9.555 | 8 | 1.194375 | 2 |
| Embodiment 15 | 13.65 | 8 | 1.70625 | 2 |
| Embodiment 16 | 6.825 | 8 | 0.853125 | 5 |
| Embodiment 17 | 9.555 | 8 | 1.194375 | 5 |
| Embodiment 18 | 13.65 | 8 | 1.70625 | 5 |
| Comparative Embodiment 1 | 5.84 | 8 | 0.73 | 5 |
| Comparative Embodiment 2 | 28.05 | 8 | 3.51 | 5 |

**Table 1 (Continued)**

| Embodiment | As-produced water content (ppm) | Post-pulverization water content (ppm) | Post-drying water content (ppm) | Specific charge capacity | Specific discharge capacity | First-cycle Coulombic efficiency |
|---|---|---|---|---|---|---|
| Embodiment 1 | 926 | 895 | 663 | 115.23 | 114.53 | 99.39% |
| Embodiment 2 | 723 | 684 | 458 | 115.38 | 114.96 | 99.64% |
| Embodiment 3 | 580 | 492 | 234 | 115.69 | 115.53 | 99.86% |
| Embodiment 4 | 939 | 901 | 698 | 115.09 | 114.24 | 99.26% |
| Embodiment 5 | 702 | 665 | 492 | 115.13 | 114.35 | 99.32% |
| Embodiment 6 | 593 | 554 | 432 | 115.19 | 114.42 | 99.33% |
| Embodiment 7 | 1102 | 982 | 894 | 113.05 | 111.04 | 98.22% |
| Embodiment 8 | 894 | 764 | 674 | 113.62 | 112.04 | 98.61% |
| Embodiment 9 | 796 | 639 | 603 | 113.98 | 112.69 | 98.87% |
| Embodiment 10 | 1165 | 969 | 823 | 112.96 | 111.32 | 98.55% |
| Embodiment 11 | 899 | 732 | 625 | 113.48 | 111.98 | 98.68% |
| Embodiment 12 | 801 | 628 | 597 | 113.89 | 112.64 | 98.90% |

(continued)

| Embodiment | As-produced water content (ppm) | Post-pulverization water content (ppm) | Post-drying water content (ppm) | Specific charge capacity | Specific discharge capacity | First-cycle Coulombic efficiency |
|---|---|---|---|---|---|---|
| Embodiment 13 | 1389 | 1198 | 1103 | 110.19 | 107.02 | 97.12% |
| Embodiment 14 | 1126 | 997 | 792 | 112.08 | 108.96 | 97.22% |
| Embodiment 15 | 956 | 854 | 763 | 112.19 | 109.32 | 97.44% |
| Embodiment 16 | 1392 | 1189 | 1109 | 109.01 | 105.92 | 97.17% |
| Embodiment 17 | 1189 | 996 | 783 | 109.23 | 106.23 | 97.25% |
| Embodiment 18 | 985 | 899 | 762 | 110.03 | 107.06 | 97.30% |
| Comparative Embodiment 1 | 2350 | 1813 | 1649 | 101.02 | 96.42 | 95.44% |
| Comparative Embodiment 2 | 2130 | 1742 | 1634 | 100.96 | 95.94 | 95.02% |

As can be seen from Table 1, in the embodiments, when the mass of the precursor and the heating rate are constant, the higher the ratio within the above range, the lower the water content (or the higher the performance). In contrast to Comparative Embodiments 1 to 2, the embodiments of this application (the ratio between the ventilation volume value of the sintering atmosphere and the mass value of the precursor material falls within the range of 0.85 to 3.42 m$^3$/kg) have produced a positive active material with a lower water content, and the water content of the positive active material in the embodiments of this application is lower than 1600 ppm.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

**Claims**

1. A positive active material, wherein the positive active material is a composite of $Na_xR_y(PO_4)_z(P_2O_7)_k$ and C, wherein $1 \leq x \leq 7$, $1 \leq y \leq 4$, $1 \leq z \leq 2$, $1 \leq k \leq 4$, and R comprises at least one of Mg, Al, Sc, Ti, V, Cr, Mn, Fe, Co, Ni, Cu, Zn, Zr, Nb, Mo, Sn, Hf, Ta, W, or Pb; and a water content of the positive active material is not higher than 1600 ppm.

2. The positive active material according to claim 1, wherein the water content is not higher than 1400 ppm, optionally not higher than 1200 ppm, optionally not higher than 1000 ppm, optionally not higher than 900 ppm, optionally not lower than 50 ppm, further optionally not lower than 70 ppm, and still further optionally is 200 to 800 ppm.

3. The positive active material according to claim 1 or 2, wherein a chemical composition of the positive active material satisfies at least one of the following conditions:

   (1)

   $$3 \leq x \leq 5;$$

   (2)

   $$2 \leq y \leq 4;$$

   (3)

   $$1.5 \leq z \leq 2;$$

(4)

$$1 \leq k \leq 1.5;$$

or
(5) R is Fe.

4. A method for preparing a positive active material, wherein the positive active material is a composite of $Na_xR_y(PO_4)_z$ $(P_2O_7)_k$ and C, wherein $1 \leq x \leq 7$, $1 \leq y \leq 4$, $1 \leq z \leq 2$, $1 \leq k \leq 4$, and R comprises at least one of Mg, Al, Sc, Ti, V, Cr, Mn, Fe, Co, Ni, Cu, Zn, Zr, Nb, Mo, Sn, Hf, Ta, W, or Pb; a water content of the positive active material is not higher than 1600 ppm; and the method comprises the following steps:

a) preparing a precursor material: preparing a mixed slurry containing an R source compound, a sodium source compound, a phosphorus source compound, and a carbon source compound, and drying the mixed slurry to obtain the precursor material;
b) sintering the precursor material in a sintering atmosphere to obtain the positive active material, wherein a ratio of a ventilation volume value of a sintering atmosphere to a mass value of the precursor material is 0.85 to 3.42 $m^3$/kg, optionally 1.70 to 3.42 $m^3$/kg, and further optionally 2.27 to 3.42 $m^3$/kg.

5. The method according to claim 4, wherein, in step b), a heating rate is 0.5 to 5 °C/ min, and optionally 2 to 5 °C/min.

6. The method according to claim 4 or 5, wherein, in step b), the sintering atmosphere comprises nitrogen and/or argon.

7. The method according to claim 6, wherein, in step b), a flow rate of the nitrogen is 2 to 10.5 L/min, optionally 5 to 10.5 L/min; and/or, the sintering continues for a duration of approximately 10 to 30 hours, and optionally approximately 18 to 23 hours.

8. The method according to any one of claims 4 to 7, further comprising the following step:
c) pulverizing the positive active material, wherein the pulverization is performed at an ambient humidity not higher than 10%, and optionally at an ambient humidity of 2% to 10%.

9. The method according to any one of claims 4 to 8, further comprising the following step:
d) oven-drying the positive active material.

10. A positive electrode plate, comprising the positive active material according to any one of claims 1 to 3 or a positive active material prepared by the method according to any one of claims 4 to 9.

11. A secondary battery, comprising the positive electrode plate according to claim 10.

12. An electrical device, comprising the secondary battery according to claim 11.

<u>5</u>

FIG. 1

<u>5</u>

53

52
52

51

FIG. 2

<u>4</u>    5    5

5

FIG. 3

1

FIG. 4

FIG. 5

FIG. 6

## INTERNATIONAL SEARCH REPORT

| International application No. |
| --- |
| **PCT/CN2023/072597** |

| A. | CLASSIFICATION OF SUBJECT MATTER |
| --- | --- |

H01M 4/58(2010.01)i；  H01M 10/36(2010.01)i

According to International Patent Classification (IPC) or to both national classification and IPC

| B. | FIELDS SEARCHED |
| --- | --- |

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 钠, 磷酸盐, 含水量, battery, cell, sodium, phosphate, water content

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112510198 A (WUHAN UNIVERSITY) 16 March 2021 (2021-03-16) description, paragraphs 6-108 | 1-12 |
| Y | CN 115498177 A (NINGDE CONTEMPORARY AMPEREX TECHNOLOGY CO., LTD.) 20 December 2022 (2022-12-20) description, paragraphs 4-104 | 1-12 |
| Y | CN 112768673 A (WUHAN UNIVERSITY) 07 May 2021 (2021-05-07) description, paragraphs 4-54 | 1-12 |
| Y | CN 115064695 A (HUBEI WANRUN NEW ENERGY TECHNOLOGY CO., LTD.) 16 September 2022 (2022-09-16) description, paragraphs 8-29 | 1-12 |
| Y | CN 115566187 A (SHANGHAI LINGFANG NEW ENERGY TECHNOLOGY CO., LTD.) 03 January 2023 (2023-01-03) description, paragraphs 5-98 | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 August 2023** | **22 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2023/072597**

| Patent document cited in search report | | | Publication date (day/month/year) | Patent family member(s) | | | Publication date (day/month/year) |
|---|---|---|---|---|---|---|---|
| CN | 112510198 | A | 16 March 2021 | CN | 112510198 | B | 17 June 2022 |
| CN | 115498177 | A | 20 December 2022 | WO | 2020143533 | A1 | 16 July 2020 |
| | | | | CN | 111435741 | A | 21 July 2020 |
| | | | | US | 2021336262 | A1 | 28 October 2021 |
| | | | | EP | 3907793 | A1 | 10 November 2021 |
| | | | | EP | 3907793 | A4 | 16 March 2022 |
| | | | | CN | 115472818 | A | 13 December 2022 |
| | | | | CN | 115472819 | A | 13 December 2022 |
| | | | | CN | 115498177 | A | 20 December 2022 |
| CN | 112768673 | A | 07 May 2021 | CN | 112768673 | B | 03 June 2022 |
| CN | 115064695 | A | 16 September 2022 | | None | | |
| CN | 115566187 | A | 03 January 2023 | | None | | |

Form PCT/ISA/210 (patent family annex) (July 2022)